# EUROPEAN PATENT APPLICATION

(11) **EP 3 489 478 A1**
(43) Date of publication of application: **29.05.2019**
(21) Application number: 18206008.7
(22) Date of filing: 13.11.2018
(51) Int. Cl.: F01N 3/20, F01P 3/20

(54) **COOLING SYSTEM FOR DIESEL EXHAUST FLUID DOSER**

(30) Priority: 28.11.2017 US 201715824210
(71) Applicant: Deere & Company, Moline, IL 61265 (US)
(72) Inventor: SCHMITZ, Joseph P, Waterloo, IA 50613 (US); HOOGLAND, Axel, Waterloo, IA 50613 (US)
(74) Representative: Robson, Aidan John

(57) **Abstract**

A cooling system for a diesel engine. A surge tank defines a first coolant reservoir. A pump is operable when energized to drive a circulating flow of coolant through the diesel engine for cooling the diesel engine. A coolant channel is situated around a diesel exhaust fluid doser in an exhaust system extending from the diesel engine. A second coolant reservoir is positioned to maintain a dedicated gravity-fed coolant supply to the coolant channel situated around the diesel exhaust fluid doser when the pump is not energized. A vent line extends from the second coolant reservoir to the surge tank to allow venting from the coolant channel into the surge tank through the second coolant reservoir without evacuating liquid coolant from the coolant channel.

## Description

### BACKGROUND

The disclosure relates to engine cooling systems, and more particularly to cooling of a diesel exhaust fluid doser.

### SUMMARY

The disclosure provides, in one aspect, a cooling system for a diesel engine. A surge tank defines a first coolant reservoir. A pump is operable when energized to drive a circulating flow of coolant through the diesel engine for cooling the diesel engine. A coolant channel is situated around a diesel exhaust fluid doser in an exhaust system extending from the diesel engine. A second coolant reservoir is positioned to maintain a dedicated gravity-fed coolant supply to the coolant channel situated around the diesel exhaust fluid doser when the pump is not energized. A vent line extends from the second coolant reservoir to the surge tank to allow venting from the coolant channel into the surge tank through the second coolant reservoir without evacuating liquid coolant from the coolant channel.

The disclosure provides, in another aspect, a method of operating a cooling system connected to a diesel engine and an exhaust system of the diesel engine. A pump is energized in a first mode of operation to circulate coolant through the diesel engine and through a coolant channel situated around a diesel exhaust fluid doser. Coolant is discharged from the coolant channel upwardly into a coolant reservoir in the first mode of operation. A transition occurs to a second mode of operation in which the pump is not energized. Vaporized coolant is directed from the coolant channel through the coolant reservoir and then through a vent line to a coolant surge tank in the second mode of operation. The coolant channel is continuously back-filled with a gravity-fed supply of liquid coolant from the coolant reservoir as coolant is vaporized in the second mode of operation.

Further aspects are set forth in the detailed description and accompanying drawings.

### BRIEF DESCRIPTION OF THE DRAWINGS

FIG. 1 is a schematic view of a cooling system according to one embodiment of the present disclosure.
FIG. 2 is a schematic view of a cooling system according to another embodiment of the present disclosure.
FIG. 3 is a schematic view of an engine and exhaust system to which the cooling systems of FIGS. 1 and 2 may be applied.

### DETAILED DESCRIPTION

Before any embodiments are explained in detail, it is to be understood that the disclosure is not limited in its application to the details of construction and the arrangement of components set forth in the following description or illustrated in the accompanying drawings.

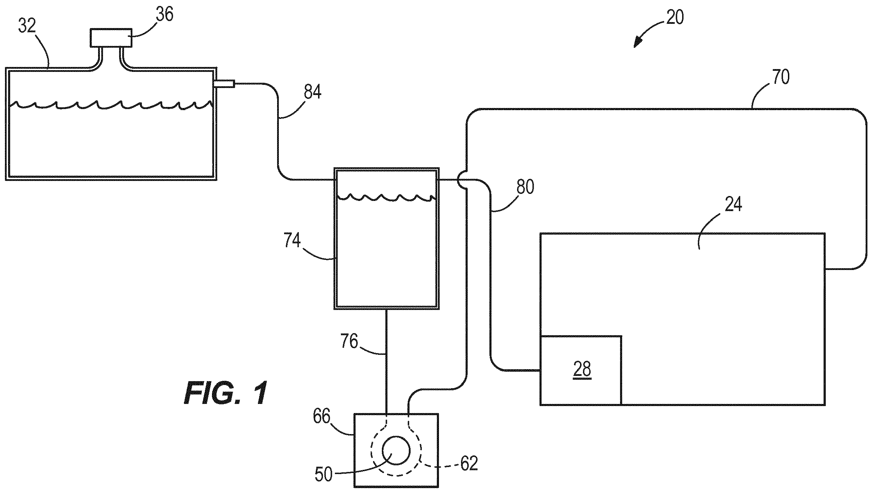

A cooling system 20 for an internal combustion engine 24 is illustrated in FIG. 1. The cooling system 20 may be provided in a vehicle, such as a passenger vehicle, a ship, an over-the-road commercial truck, or a piece of off-road agricultural or construction equipment. However, the cooling system 20 can also be provided within stationary industrial equipment. Though not shown here, the cooling system 20 can include additional components (e.g., radiator, thermostat, etc.), the structure and function of which can, in some constructions, be conventional and immediately appreciated by those of skill in the art so as to not dedicated discussion thereof. The operation of the cooling system 20 generally includes circulating coolant with a pump 28 through the internal cooling channels or jackets within the engine 24. The coolant absorbs heat from the engine 24 and rises in temperature, and routing of the coolant through a heat exchanger or "radiator" allows heat dissipation from the coolant to atmosphere. During normal operation, the coolant may remain in liquid form throughout the circulation path. The circulating coolant is in fluid communication with a surge tank 32 having a pressure relief valve 36 so that pressurization of the coolant (e.g., due to overheating) beyond a threshold value can be relieved without over-pressurizing the system components.

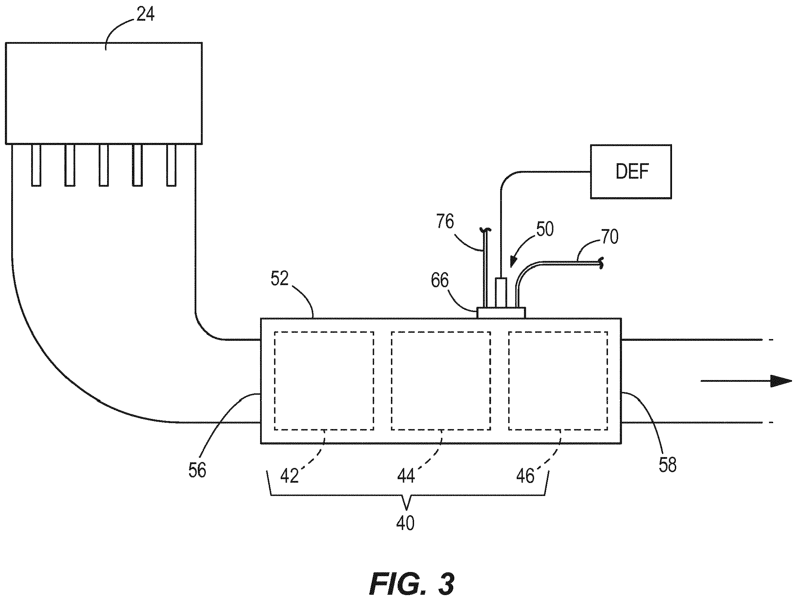

The aforementioned engine 24 is a diesel engine and may be accompanied by an exhaust system with emissions control equipment as shown in FIG. 3. For example, the exhaust system of the engine may provide an aftertreatment device such as an inline aftertreatment device 40 including a diesel particulate filter (DPF) 42, diesel oxidation catalyst (DOC) 44, and selective catalytic reduction (SCR) system 46, while aftertreatment devices of alternate constructions are also optional in other constructions. The SCR system requires a reductant, such as ammonia or urea, to be added to the exhaust gas stream for the chemical conversion of NOₓ. The reductant can be supplied into the exhaust system upstream of the SCR system, commonly as an aqueous urea solution, by an injector 50. The supplied reductant is referred to as diesel exhaust fluid (DEF), and the injector 50 as a DEF doser. As shown in FIG. 3, the inline aftertreatment device 40 can be an all-in-one unit in which the DPF 42, the DOC 44, and the SCR system 46 are all integrated into a single common housing 52. As such, the inline aftertreatment device 40 including the DPF 42, the DOC 44, and the SCR system 46 may have only a single inlet 56 and a single outlet 58 for connection to upstream and downstream exhaust piping, respectively.

The DEF doser 50 can be cooled by the cooling system 20. In particular, a coolant channel 62 can be situated around the DEF doser 50 as schematically represented in FIG. 1. The coolant channel 62 can be provided within a baseplate fixture 66 that receives at least a portion of the DEF doser 50 and mounts it to the inline aftertreatment device 40. In some constructions a dispensing tip of the DEF doser 50 is at least partially surrounded or encircled by the coolant channel 62. The baseplate fixture 66 defines a coolant inlet port and a coolant outlet port, with the coolant channel 62 extending therebetween. The pump 28 can supply coolant to the coolant channel 62 via a supply line 70. As illustrated, the supply line 70 may be downstream of the engine's internal cooling channels or jackets in the direction of pumping. The coolant is pumped through the DEF doser coolant channel 62 to a coolant reservoir 74 positioned above the coolant channel 62, and thus the DEF doser 50. In other words, with the Earth's surface as a reference, the physical layout of the cooling system 20 in the vehicle or device having the engine 24 is such that the elevation of the coolant reservoir 74 is higher than that of the coolant channel 62. In some constructions, the coolant reservoir 74 may be positioned directly above the coolant channel 62. The coolant channel 62 can be in direct fluid communication with the coolant reservoir 74 with no intermediary components or lines, or alternatively, the coolant channel 62 can be in fluid communication with the coolant reservoir 74 through a reservoir line 76 as shown in FIG. 1. The coolant reservoir 74 defines a reservoir that is independent and spaced from the coolant reservoir defined by the surge tank 32. The coolant reservoir 74 can be a dedicated reservoir containing a dedicated volume of coolant for the DEF doser 50 after engine shut-down. The coolant reservoir 74 can define a chamber having a volume less than the volume of a chamber defined by the surge tank 32. In some constructions, the volume of the coolant reservoir 74 is less than 500 milliliters.

A return line 80 extends from the coolant reservoir 74 toward the pump 28, although it is again noted that additional components and lines are provided in the engine's overall cooling system, and the pump 28 may not rely solely on the return of coolant from the reservoir 74 for pumping through the engine 24. Furthermore, a vent line 84 extends from the coolant reservoir 74 to the surge tank 32. The vent line 84 can constitute a direct connection between the coolant reservoir 74 and the surge tank 32, having no interstitial components. The vent line 84 can connect to each of the surge tank 32 and the coolant reservoir 74 at an upper part thereof. Although the vent line 84 is added to the system 20 as a dedicated gas vent line and not as a primary coolant flow line required for liquid coolant circulation, the vent line 84 serves as a pressure escape path separate from the supply line 70 and the return line 80, but may also direct a limited flow of liquid coolant to the surge tank 32 during normal operation as the pump 28 runs. The vent line 84 can have an internal diameter smaller than an internal diameter of one or more of the other lines coupled to the reservoir 74, namely the supply line 70, the reservoir line 76, and/or the return line 80 (e.g., at least 20 percent or at least 30 percent smaller) and the pumped flow of liquid coolant through the vent line 84 to the surge tank 32 can be significantly limited relative to the other lines 70, 76, 80. The vent line 84 can also have a length shorter than a length of the supply line 70 and/or shorter than a length of the return line 80. Whether by length, internal diameter, or both, the vent line 84 is the line in which vapor at the coolant channel 62 has the least resistance and can push coolant and vapor back to the surge tank 32 when the pump 28 ceases operation. The supply line 70, the return line 80, and the vent line 84 all rise to an elevation above a level of coolant within the coolant reservoir 74 to naturally trap liquid coolant in the coolant reservoir 74 above the coolant channel 62 when the pump 28 is not energized. Further, the coolant reservoir 74 (e.g., the connection of the vent line 84 on the coolant reservoir 74) is positioned lower in elevation than the surge tank coolant level so that coolant does not tend to drain from the coolant reservoir 74 into the surge tank 32.

In operation, the cooling system 20 circulates coolant around the DEF doser 50 during running of the engine 24. During this time, the coolant reservoir 74 is full and passes a continuous flow of liquid coolant, effectively serving as nothing more than an expanded coolant line. Despite the DEF doser 50 being located in a particularly hot environment within the inline aftertreatment device 40, the coolant flow is continuous and sufficient to maintain an operating temperature (e.g., at the tip) of the DEF doser 50 from exceeding a predetermined maximum temperature threshold. The predetermined maximum temperature threshold can be a temperature between 100 degrees Celsius and 180 degrees Celsius (e.g., 140 degrees Celsius). However, immediately following an engine shut-off, there may be a significant amount of residual heat within the inline aftertreatment device 40, thus exposing the DEF doser 50 to high temperatures without a continuous flow of coolant since the operation of the pump 28 is dependent upon running of the engine 24. In the cooling system 20 of FIG. 1, the coolant reservoir 74 reserves liquid coolant above the DEF doser 50, providing a gravity-fed coolant supply to the coolant channel 62 and the DEF doser 50 despite the pump 28 not running to provide a coolant flow. Due to the high temperatures at the tip of the DEF doser 50, coolant supplied from the coolant reservoir 74 may vaporize there and pressure may increase. Varying degrees of coolant vaporization around the tip of the DEF doser 50 may be part of the normal operation, or limited to certain fringe conditions where temperatures, ambient and/or those of the inline aftertreatment device 40, are particularly high. However, the vent line 84 provides a dedicated path for the escape of gases such as vaporized coolant to the surge tank 32 so that pressure is not held and liquid coolant is not displaced away from the coolant channel 62. In other words, as vaporization of coolant occurs, gases are vented, and liquid coolant from the coolant reservoir 74 continuously back-fills into the coolant channel 62 to keep the coolant channel 62 full of liquid coolant, which ensures adequate cooling ability compared to air and/or gas-phase coolant. The coolant reservoir 74 is sized with a volume that is sufficient to keep the DEF doser below the predetermined maximum temperature threshold during the cool-down period immediately following engine shut-off. In other words, the liquid coolant within the reservoir 74 has the cooling capacity to allow the cooling of the DEF doser 50 at least down to a steady temperature below the predetermined maximum temperature threshold that will no longer vaporize the coolant when there is no pumped flow, although an amount of coolant consumption (i.e., vaporization) may occur during the cooling process.

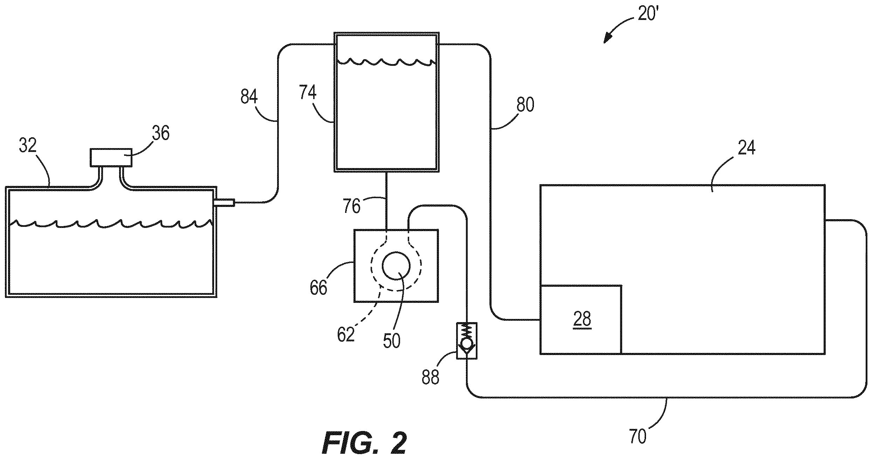

Although the layout of the cooling system 20 of FIG. 1 ensures, through the relative elevations of the coolant reservoir 74 and the surge tank 32, that liquid coolant does not drain from the coolant reservoir 74 to the surge tank 32 in the period directly following shut down of the engine 24 and the pump 28, packaging constraints of a vehicle or device may not always be conducive to such a layout. For example, it may be necessary in some implementations to have the coolant reservoir 74 positioned higher than the coolant level in the surge tank 32. This may relate to conditions of necessary placement of an exhaust system since the elevation of the coolant reservoir 74 is dictated by the elevation of the DEF doser 50. Such a layout is illustrated in FIG. 2, which is indicated as an alternate cooling system 20'. It is noted that the elements, features, and functions of the cooling system 20' are in accordance with the above description of FIG. 1, except as specifically noted. Immediately following an engine shut-off, the temperature of the DEF doser 50 is held from exceeding the predetermined maximum temperature threshold by the coolant reservoir 74, which reserves liquid coolant above the DEF doser 50 to provide a gravity-fed coolant supply to the coolant channel 62 and the DEF doser 50 despite the pump 28 not running to provide a coolant flow. Due to the high temperatures at the tip of the DEF doser 50, coolant supplied from the coolant reservoir 74 may vaporize there and pressure may increase. However, the vent line 84 provides a dedicated path for the escape of gases such as vaporized coolant to the surge tank 32 so that pressure is not held and liquid coolant is not displaced away from the coolant channel 62. With the DEF doser 50 and the coolant reservoir 74 being relatively high-mounted in the cooling system 20' of FIG. 2, the most convenient routing of the supply line 70 may not extend to an elevation above a level of coolant within the coolant reservoir 74 as in FIG. 1. However, a check valve 88 can be provided in the supply line 70 to block the potential outflow of coolant from the coolant channel 62 backward in the supply line 70 toward the engine 24 when the pump 28 is not energized and pressure at the coolant channel 62 is elevated. Alternatively, a special routing of the supply line 70 (similar to that shown in FIG. 1) can be implemented to extend the supply line 70 to an elevation above a level of coolant within the coolant reservoir 74. In such a scenario, the check valve 88 might be eliminated.

Another benefit of the vent line 84 is provided at the stage of initial system filling with coolant, or after a drain and re-fill, at which time the vent line 84 aids in de-aerating the system, particularly the coolant reservoir 74 and/or the coolant channel 62. By providing enhanced de-aeration, the DEF doser 50 is able to be effectively cooled by liquid coolant more quickly. Various features and advantages are set forth in the following claims.

## Claims

1. A cooling system for a diesel engine, the cooling system comprising:
a surge tank defining a first coolant reservoir;
a pump operable when energized to drive a circulating flow of coolant through the diesel engine for cooling the diesel engine;
a coolant channel situated around a diesel exhaust fluid doser in an exhaust system extending from the diesel engine;
a second coolant reservoir positioned to maintain a dedicated gravity-fed coolant supply to the coolant channel situated around the diesel exhaust fluid doser when the pump is not energized; and
a vent line extending from the second coolant reservoir to the surge tank to allow venting from the coolant channel into the surge tank through the second coolant reservoir without evacuating liquid coolant from the coolant channel.

2. The cooling system of claim 1, further comprising a supply line extending to the coolant channel to supply pumped coolant thereto, and a return line extending from the second coolant reservoir to the pump, wherein the vent line is the path of least resistance among the supply line, the return line, and the vent line for vapor at the coolant channel to reach the surge tank when the pump is off.

3. The cooling system of claim 1, further comprising a first line extending from the coolant channel to the second coolant reservoir to supply pumped coolant thereto, and a second line extending from the second coolant reservoir to the pump, wherein the vent line has an internal diameter smaller than an internal diameter of the first line and smaller than an internal diameter of the second line.

4. The cooling system of claim 1, 2 or 3, wherein the diesel exhaust fluid doser is coupled to an inline aftertreatment device including a diesel particulate filter, a diesel oxidation catalyst, and a selective catalytic reduction system, and wherein the diesel exhaust fluid doser is positioned to discharge diesel exhaust fluid within the inline aftertreatment device upstream of the selective catalytic reduction system.

5. The cooling system of claim 4, wherein the diesel particulate filter, the diesel oxidation catalyst, and the selective catalytic reduction system are all integrated into a single common housing.

6. The cooling system of any preceding claim, wherein the second coolant reservoir is positioned at an elevation above a level of coolant within the surge tank, and wherein a supply line to the coolant channel from the pump, a return line from the second coolant reservoir to the pump, and the vent line all rise to an elevation above a level of coolant within the coolant reservoir; or wherein the second coolant reservoir is positioned at an elevation above a level of coolant within the surge tank, and wherein a supply line to the coolant channel from the pump includes a check valve that prevents backflow of coolant from the coolant channel into the supply line; or wherein the second coolant reservoir is positioned at an elevation below a level of coolant within the surge tank.

7. The cooling system of any preceding claim, further comprising a reservoir line extending directly between a bottom of the second coolant reservoir and the coolant channel.

8. The cooling system of any preceding claim, wherein the vent line extends directly from the second coolant reservoir to the surge tank.

9. The cooling system of any preceding claim, wherein the surge tank includes a pressure relief valve.

10. A method of operating a cooling system connected to a diesel engine and an exhaust system of the diesel engine, the method comprising:
energizing a pump in a first mode of operation to circulate coolant through the diesel engine and through a coolant channel situated around a diesel exhaust fluid doser;
discharging coolant from the coolant channel upwardly into a coolant reservoir in the first mode of operation;
transitioning to a second mode of operation in which the pump is not energized;
directing vaporized coolant from the coolant channel through the coolant reservoir and then through a vent line to a coolant surge tank in the second mode of operation; and
continuously back-filling the coolant channel with a gravity-fed supply of liquid coolant from the coolant reservoir as coolant is vaporized in the second mode of operation.

11. The method of claim 10, wherein the pump is driven by the diesel engine, and transitioning to the second mode of operation includes shutting off the diesel engine.

12. The method of claim 10 or 11, further comprising cooling the diesel exhaust fluid doser in the first mode of operation as the diesel exhaust fluid doser injects diesel exhaust fluid into an inline aftertreatment device of the exhaust system including a diesel particulate filter, a diesel oxidation catalyst, and a selective catalytic reduction system.

13. The method of claim 12, wherein the diesel exhaust fluid doser injects diesel exhaust fluid into a single common housing containing the diesel particulate filter, the diesel oxidation catalyst, and the selective catalytic reduction system.

14. The method of claim 10, 11, 12 or 13, wherein the vaporized coolant is directed with an upward elevation from the coolant reservoir to the coolant surge tank through the vent line in the second mode of operation; or wherein the vaporized coolant is directed with a downward elevation from the coolant reservoir to the coolant surge tank through the vent line in the second mode of operation, the method further comprising closing a valve in the second mode of operation to block backflow of coolant from the coolant channel into a supply line provided to direct coolant into the coolant channel from the pump; or, wherein the vaporized coolant is directed with a downward elevation from the coolant reservoir to the coolant surge tank through the vent line in the second mode of operation, the method further comprising blocking the outflow of coolant from the coolant reservoir by directing each of the following to an elevation above a coolant level in the coolant reservoir: a supply line provided to direct coolant into the coolant channel from the pump, a return line from the second coolant reservoir to the pump, and the vent line.

15. The method of any of claims 10 to 14, further comprising opening a relief valve in the surge tank in response to pressure exceeding a threshold value.
